# EUROPEAN PATENT APPLICATION

(11) **EP 2 532 906 A1**
(43) Date of publication of application: **12.12.2012**
(21) Application number: 11739814.9
(22) Date of filing: 03.02.2011
(51) Int. Cl.: F16C 33/66, F16C 19/36, F16C 33/46

(54) **CONICAL ROLLER BEARING**

(30) Priority: 27.12.2010 JP 2010290170; 05.02.2010 JP 2010024416; 05.02.2010 JP 2010024411
(71) Applicant: JTEKT Corporation, Osaka-shi, Osaka 542-8502 (JP)
(72) Inventor: USUKI, Isao, Osaka-shi Osaka 542-8502 (JP); UENO, Hiroshi, Osaka-shi Osaka 542-8502 (JP); NAKANISHI, Hirosato, Osaka-shi Osaka 542-8502 (JP); SAKAGUCHI, Masashi, Osaka-shi Osaka 542-8502 (JP); HAMADA, Kazuki, Osaka-shi Osaka 542-8502 (JP); HIRAOKA, Hironori, Osaka-shi Osaka 542-8502 (JP)
(74) Representative: TBK
(86) International application number: PCT/JP2011/052225
(87) International publication number: WO 2011/096466

(57) **Abstract**

In a cage 5, parallel portions 35 are formed that face a raceway surface 12 of a inner ring 2 in a radial direction and that extend in an axial direction from a small diameter side of a tapered raceway surface 12 toward a side of a large flange part 14. Grooves extending in the axial direction are formed on inner surfaces 40 of the parallel portions 35. Between the tapered raceway surface 12 of the inner ring 2 and the inner surfaces 40 of the parallel portions 35, gaps are formed that allow gear oil to be retained in the grooves through agency of surface tension of the gear oil when the cage 5 is stationary relative to the inner ring 2.

## Description

### TECHNICAL FIELD

The present invention relates to a conical bearing and, for instance, relates to a conical bearing that is suitably used for supporting a pinion shaft or the like of a pinion shaft support unit for vehicle such as differential gear unit, transfer unit or trans-axle unit.

### BACKGROUND ART

Among conventional conical bearings is that disclosed in JP H11-48805 A (Patent Literature 1). The conical bearing has a inner ring, a outer ring, and tapered rollers. The inner ring has a large flange part that is in contact with large-diameter end faces of the tapered rollers, on a larger-diameter side of a tapered raceway surface thereof. An inner circumferential surface of the inner ring is fixed to a pinion shaft of a differential gear unit, while an outer circumferential surface of the outer ring is fixed to an annular partition wall in the differential gear unit.

In the conical bearing, oil that has flowed from a ring gear side of the differential gear unit via an oil path is made to flow, between an inner circumferential surface of the outer ring and an outer circumferential surface of the inner ring, from an opening on a smaller-diameter side of the tapered raceway surface of the inner ring to an opening on the larger-diameter side of the tapered raceway surface of the inner ring, so that the outer ring, the inner ring and the tapered rollers are prevented from seizure.

For the conventional conical bearing, there is a demand for substantially reducing oil stirring resistance to achieve a substantial decrease in torque. When a quantity of the oil flowing in the conical bearing is limited to an extremely small quantity for the substantial reduction in the oil stirring resistance that is a major factor of the torque, for purpose of achieving the substantial decrease in the torque, however, it may occur that the oil does not spread enough to sliding parts between the large flange part of the inner ring and the larger-diameter end faces of the tapered rollers, causing seizure of the sliding parts.

### CITATION LIST

### Patent Literature

PTL1: JP H11-48805 A

### SUMMARY OF INVENTION

### Technical Problem

Therefore, it is an object of the invention to provide a conical bearing by which seizure can be suppressed on a tapered-roller guiding surface of a flange part placed on larger-diameter side of a tapered raceway surface of a inner ring.

### Solution to Problem

In order to accomplish the above object, there is provided, a conical bearing comprising:
a outer ring having a tapered raceway surface,
a inner ring having a tapered raceway surface and a flange part placed on larger-diameter side of the tapered raceway surface,
a plurality of tapered rollers placed between the tapered raceway surface of the outer ring and the tapered raceway surface of the inner ring, and
a cage including a first annular part, a second annular part having an inside diameter larger than an inside diameter of the first annular part, a plurality of pillar parts that couple the first annular part and the second annular part to each other and that are placed so as to be spaced from one another in a circumferential direction, and pockets for housing the tapered rollers between the pillar parts neighboring in the circumferential direction, wherein
the cage comprises axially extending inner surface parts that face the tapered raceway surface of the inner ring at intervals and that extend in an axial direction from smaller-diameter side of the tapered raceway surface of the inner ring toward the flange part, between the first annular part and the second annular part with respect to the axial direction and inside the pillar parts with respect to a radial direction, wherein
gaps between the tapered raceway surface of the inner ring and the axially extending inner surface parts that allow lubricating liquid to be retained on the axially extending inner surface parts through agency of surface tension of the lubricating liquid when the cage is stationary relative to the inner ring, wherein
the cage further comprises:
   a bent part that is connected to a radially inner end part of the first annular part and that is bent from the end part toward the flange part in the axial direction, and
   inner pillar parts that extend in the axial direction from an end part being located opposite to the first annular part in the bent part, toward the large flange part and that are positioned so as to be spaced from the pillar parts in the radial direction, and wherein
the axially extending inner surface parts reside on the inner pillar parts.

According to the invention, when the cage is stationary relative to the inner ring, the gaps that allow the lubricating liquid to be retained on the axially extending inner surface parts through agency of the surface tension of the lubricating liquid exist between the tapered raceway surface of the inner ring and the axially extending inner surface parts, and thus the lubricating liquid can be made to reach the tapered-roller guiding surface of the large flange part of the inner ring along the axially extending inner surface parts on the inner pillar parts. Accordingly, lubricity of the tapered-roller guiding surface of the large flange part can be improved and seizure on the tapered-roller guiding surface can be suppressed.

According to the invention, the axially extending inner surface parts reside on the inner pillar parts that are positioned so as to be spaced from the pillar parts in the radial direction, and thus a weight of the cage and wind resistance can be reduced in comparison with a configuration in which the axially extending inner surface parts are part of the pillar parts. In addition, manufacturing costs therefor can be reduced.

According to the invention, having a configuration in which the inner pillar parts are connected through the bent part to the radially inner end parts of the first annular part, the bent part and the inner pillar parts can be formed only by formation of an extending part that protrudes and extends from a side of the first annular part opposite to the pillar parts and subsequent folding of the extending part by press working, on condition that the cage is made of metal. Therefore, the cage having the inner pillar parts can easily be formed only by adding press process to existing techniques. On condition that the cage is made of resin, the cage can be formed by injection molding or the like, for instance.

One embodiment includes:
the axially extending inner surface parts comprise grooves extending in the axial direction, and wherein
the gaps allow the lubricating liquid to be retained in the grooves through agency of the surface tension of the lubricating liquid when the cage is stationary relative to the inner ring.

According to the embodiment, the lubricating liquid (e.g., lubricating oil or cleaning solvent or the like) can easily be supplied to the side of the flange part through the grooves because the cage includes the axially extending inner surface parts that face the tapered raceway surface of the inner ring at intervals and because the axially extending inner surface parts include the grooves extending in the axial direction. Accordingly, seizure on the tapered-roller guiding surface of the flange part that is for guiding the tapered rollers can be suppressed.

According to the embodiment, when the cage is stationary relative to the inner ring, the gaps that allow the lubricating liquid to be retained in the grooves through agency of the surface tension of the lubricating liquid exist between the tapered raceway surface of the inner ring and the axially extending inner surface parts, and thus the lubricating liquid in the grooves resists flowing out of the grooves, even on conditions of poor lubrication due to transportation by ship for long term or the like. Therefore, the lubricating liquid in the grooves can reliably be supplied onto the tapered-roller guiding surface of the flange part in early phase of an operation, and thus seizure on the tapered-roller guiding surface can be suppressed.

Also, there is provided, a conical bearing comprising:
A conical bearing comprising:
   a outer ring having a tapered raceway surface,
   a inner ring having a tapered raceway surface and a flange part placed on larger-diameter side of the tapered raceway surface,
   a plurality of tapered rollers placed between the tapered raceway surface of the outer ring and the tapered raceway surface of the inner ring, and
   a cage that includes a first annular part, a second annular part having an inside diameter larger than an inside diameter of the first annular part, and a plurality of pillar parts which couple the first annular part and the second annular part to each other and which are placed so as to be spaced from one another in a circumferential direction and that houses the tapered rollers in pockets formed between the pillar parts neighboring in the circumferential direction, wherein
the cage further comprises:
   axially extending inner surface parts that face the tapered raceway surface of the inner ring at intervals and that extend in an axial direction from smaller-diameter side of the tapered raceway surface of the inner ring toward the flange part, between the first annular part and the second annular part with respect to the axial direction and inside the pillar parts with respect to a radial direction, wherein
   the axially extending inner surface parts each comprise grooves that open at ends thereof on a side of the flange part and that extend in the axial direction, wherein
   a distance between the grooves and a center axis of the cage increases with approach to the flange part in the axial direction in end parts of the grooves on the side of the flange part, and wherein
   virtual extension surfaces of end parts of inside surfaces of the grooves on the side of the flange part overlap with a tapered-roller guiding surface of the flange part for guiding the tapered rollers.

According to the invention, the axially extending inner surface parts extending in the axial direction from the smaller-diameter side of the tapered raceway surface of the inner ring toward the flange part include the grooves that open at the ends thereof on the side of the flange part and that extend in the axial direction so that the distance from the grooves to the center axis increases with approach to the flange part in the axial direction, and thus centrifugal forces in an operation are capable of causing surrounding lubricant (lubricating oil or cleaning solvent or the like) to be accommodated in the grooves and causing the lubricant accommodated in the grooves to travel in the axial direction in the grooves to the side of the flange part. According to the invention, the virtual extension surfaces of the end parts of the inside surfaces of the grooves on the side of the flange part overlap with the tapered-roller guiding surface of the flange part for guiding the tapered rollers, and thus the lubricant having scattered from the openings of the grooves on the side of the large flange part efficiently reaches the tapered-roller guiding surface. Therefore, the lubricant can efficiently be supplied onto the tapered-roller guiding surface, so that running out of the lubricant in the tapered-roller guiding surface can be suppressed.

One embodiment includes:
the cage further comprises:
   a bent part that is connected to a radially inner end part of the first annular part and that is bent from the end part toward the flange part in the axial direction, and
   inner pillar parts that extend in the axial direction from an end part of the bent part, opposite to the first annular part, toward the large flange part and that are positioned so as to be spaced from the pillar parts in the radial direction, and wherein
   the axially extending inner surface parts reside on the inner pillar parts.

The axially extending inner surface parts reside on the inner pillar parts that are positioned so as to be spaced from the pillar parts in the radial direction, and thus the weight of the cage and the wind resistance can be reduced in comparison with the configuration in which the axially extending inner surface parts are part of the pillar parts. In addition, the manufacturing costs therefor can be reduced.

According to the embodiment, having a configuration in which the inner pillar parts are connected through the bent part to the radially inner end part of the first annular part, the bent part and the inner pillar parts can be formed only by formation of the extending part that protrudes and extends from a side of the first annular part opposite to the pillar parts and subsequent folding of the extending part by press working, on condition that the cage is made of metal. Therefore, the cage having the inner pillar parts can easily be formed only by adding press process to the existing techniques. On condition that the cage is made of resin, the cage can be formed by injection molding or the like, for instance.

One embodiment includes:
a outer ring having a tapered raceway surface,
a inner ring having a tapered raceway surface and a flange part placed on larger-diameter side of the tapered raceway surface,
a plurality of tapered rollers placed between the tapered raceway surface of the outer ring and the tapered raceway surface of the inner ring, and
a cage including a first annular part, a second annular part having an inside diameter larger than an inside diameter of the first annular part, a plurality of pillar parts that couple the first annular part and the second annular part to each other and that are placed so as to be spaced from one another in a circumferential direction, and pockets for housing the tapered rollers between the pillar parts neighboring in the circumferential direction, wherein
the cage further comprises:
   axially extending inner surface parts that face the tapered raceway surface of the inner ring at intervals and that extend in the axial direction from smaller-diameter side of the tapered raceway surface of the inner ring toward the flange part, between the first annular part and the second annular part with respect to the axial direction and inside the pillar parts with respect to a radial direction, and
   lubricating liquid having a surface tension or a viscosity that allows surface films to be formed between the tapered raceway surface of the inner ring and the axially extending inner surface parts when the cage is stationary relative to the inner ring, wherein
the cage further comprises:
   a bent part that is connected to a radially inner end part of the first annular part and that is bent from the end part toward the flange part in the axial direction, and
   inner pillar parts that extend in the axial direction from an end part being located opposite to the first annular part in the bent part, toward the large flange part and that are positioned so as to be spaced from the pillar parts in the radial direction, and wherein
the axially extending inner surface parts reside on the inner pillar parts.

According to the embodiment, seizure on a tapered-roller guiding surface of the large flange part placed on the larger-diameter side of the tapered raceway surface of the inner ring can effectively be suppressed.

### Advantageous Effects of Invention

According to the conical bearing of the invention, the gaps that allow the lubricating liquid to be retained on the axially extending inner surface parts through agency of the surface tension of the lubricating liquid when the cage is stationary relative to the inner ring exist between the tapered raceway surface of the inner ring and the axially extending inner surface parts, and thus the lubricating liquid can be made to reach the tapered-roller guiding surface of the large flange part of the inner ring along the axially extending inner surface parts on the inner pillar parts, so that improvement in lubricity of the tapered-roller guiding surface of the large flange part and suppression of seizure on the tapered-roller guiding surface can be attained.

According to the conical bearing of the one embodiment, in which the cage includes the axially extending inner surface parts that face the tapered raceway surface of the inner ring at intervals and in which the axially extending inner surface parts include the grooves extending in the axial direction and having ends opened or not opened on the side of the flange part, the lubricating liquid can easily be supplied to the side of the flange part through the grooves, and seizure on the tapered-roller guiding surface of the flange part that is for guiding the tapered rollers can be suppressed.

According to the conical bearing of the one embodiment, the gaps that allow the lubricating liquid to be retained in the grooves through agency of the surface tension of the lubricating liquid when the cage is stationary relative to the inner ring exist between the tapered raceway surface of the inner ring and the axially extending inner surface parts, and thus the lubricating liquid in the grooves resists flowing out of the grooves. Therefore, the lubricating liquid in the grooves can reliably be supplied onto the tapered-roller guiding surface of the flange part in early phase of an operation thereof, and the seizure on the tapered-roller guiding surface can be suppressed.

According to the conical bearing of the one embodiment, having a configuration in which the tapered rollers are stably held by the inner pillar parts so that a stable tapered-roller assembly is composed only of the cage and the plurality of tapered rollers, a small flange part can be omitted on the inner ring so that reduction in costs of the inner ring can be accomplished. In addition, parts (housing) corresponding to the inner ring and the outer ring can be made optional for customers and only the tapered-roller assembly can be supplied to the customers, without the inner ring and the outer ring. Furthermore, the tapered-roller assembly composed of the cage and the plurality of tapered rollers can be mounted on the inner ring from the smaller-diameter side of the tapered raceway surface of the inner ring after initial press fitting of the inner ring onto a shaft because the small flange part can be omitted on the inner ring. Therefore, damages to members thereof can significantly be suppressed as compared with mounting on a shaft of a conventional assembly composed of a inner ring, a cage, and a plurality of tapered rollers.

According to the conical bearing of the invention, in which the axially extending inner surface parts of the cage extending in the axial direction from the smaller-diameter side to the larger-diameter side along the tapered raceway surface of the inner ring include the grooves that open at the ends thereof on the side of the flange part and that have the distances therefrom to the center axis increasing with approach to the flange part in the axial direction, the centrifugal forces in an operation are capable of causing the surrounding lubricant to be accommodated in the grooves and causing the lubricant accommodated in the grooves to travel in the axial direction in the grooves to the side of the flange part. According to the conical bearing of the invention, additionally, the virtual extension surfaces of the end parts of the inside surfaces of the grooves on the side of the flange part overlap with the tapered-roller guiding surface of the flange part for guiding the tapered rollers, and thus the lubricant having scattered from the openings of the grooves on the side of the large flange part can efficiently be made to reach the tapered-roller guiding surface. Therefore, the lubricant can efficiently be supplied onto the tapered-roller guiding surface, so that the tapered-roller guiding surface can be restrained from running out of the lubricant.

### BRIEF DESCRIPTION OF DRAWINGS

The invention will be understood more fully from the following detailed description and the accompanying drawings. The accompanying drawings are intended only for description and do not limit the invention. In the drawings:
Fig. 1 is an axial sectional view of a conical bearing according to a first embodiment of the invention;
Fig. 2 is a perspective view of a cage the conical bearing includes;
Fig. 3 is a figure when an inner surface of a parallel portion of an inner pillar part of the cage is seen from radially inner side;
Fig. 4 is an axial sectional view of a cage of a conical bearing according to a modification;
Fig. 5 is an axial sectional view of a cage of a conical bearing according to a modification;
Fig. 6 is an axial sectional view of a conical roller according to a second embodiment of the invention; and
Fig. 7 is an axial schematic sectional view that passes across a bottom of a groove of a parallel portion in an end part of the parallel portion on a side of a large flange part.

### DESCRIPTION OF EMBODIMENTS

Hereinbelow, the invention will be described in detail with reference to embodiments shown in the drawings.

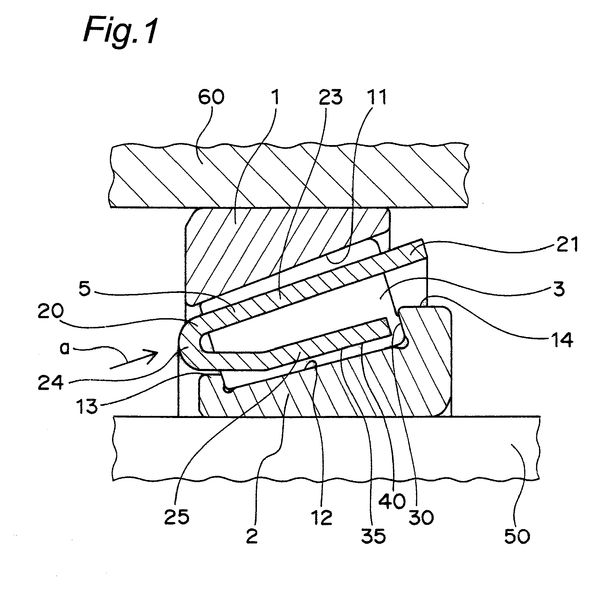

Fig. 1 is an axial sectional view of a conical bearing according to a first embodiment of the invention.

The conical bearing supports a pinion shaft 50 of a pinion shaft supporting unit for vehicle such as differential gear unit, trans-axle unit or transfer unit so that the pinion shaft 50 is rotatable relative to a housing 60 of the pinion shaft supporting unit for vehicle.

The conical bearing includes a outer ring 1, a inner ring 2, a plurality of tapered rollers 3 as rolling elements, and a cage 5. The outer ring 1, the inner ring 2, the tapered rollers 3 are composed of steel material such as bearing steel.

The outer ring 1 is fitted in and fixed to an inner circumferential surface of the housing 60 by interference fit. The outer ring 1 has a tapered raceway surface 11. The inner ring 2 is fitted on and fixed to an outer circumferential surface of the pinion shaft 50 by interference fit . The inner ring 2 has a tapered raceway surface 12, a small flange part 13 positioned on a smaller-diameter side of the tapered raceway surface 12, and a large flange part 14 positioned on a larger-diameter side of the tapered raceway surface 12. Gear oil in the pinion shaft supporting device for vehicle as an example of lubricating liquid (lubricant) flows in a direction shown by an arrow a in Fig. 1 from an opening of the smaller-diameter side of the tapered raceway surface 12 of the inner ring 2 to the opening of the larger-diameter side of the tapered raceway surface 12 of the inner ring 2 between the outer ring 1 and the inner ring 2.

The plurality of tapered rollers 3 are placed between the tapered raceway surface 11 of the outer ring 1 and the tapered raceway surface 12 of the inner ring 2 so as to be circumferentially spaced from one another in a state that the tapered rollers 3 are held by the cage 5.

The cage 5 is composed of plastic formable bearing steel such as SUJ2, steel material obtained by hardening, e.g., carbonitriding, plastic formable bearing steel, plastic formable metal such as common steel SPCC, carbon steel such as S55C, chrome molybdenum steel such as SCM415, or N22CB and N35CB (Nisshin Steel Co. Ltd standard) which take pressability into account, or the like. The cage 5 has a first annular part 20, a second annular part 21, a plurality of pillar parts 23, a bent part 24, and a plurality of inner pillar parts 25. The first annular part 20 is positioned closer to the smaller-diameter side of the tapered raceway surface 12 of the inner ring 2 than the second annular part 21 with respect to the axial direction. An inside diameter of the first annular part 20 is smaller than an inside diameter of the second annular part 21. Each of the pillar parts 23 couples the first annular part 20 and the second annular part 21 to each other. The plurality of pillar parts 23 are arranged so as to be spaced from one another in a circumferential direction of the first annular part 20. A part surrounded by the first annular part 20, the second annular part 21 and circumferentially neighboring two pillar parts 23 forms a pocket in which a tapered roller 3 is housed. In an axial section including the pillar part 23, the first annular part 20, the pillar part 23, and the second annular part 21 generally extend on a straight line.

The bent part 24 is connected to a radially inner end of the first annular part 20. The bent part 24 is bent toward radially inner side from a direction in which the straight line extends. The inner pillar parts 25 extend in the axial direction from an end part being located opposite to the first annular part 20 in the bent part 24, toward the large flange part 14 and are positioned so as to be spaced from the pillar parts 23 in the radial direction. As shown in Fig.1, a portion of the inner pillar part 25 that extends from center part thereof in general with respect to the axial direction to an end thereof on the side of the large flange part 14 extends generally in parallel with and along the tapered raceway surface 12 of the inner ring 2 (hereinafter, the portion will be referred to as parallel portion 35 of the inner pillar part 25). The inner pillar parts 25 are positioned so as to be spaced from the small flange part 13 and the large flange part 14.

As shown in Fig.1, an end face of the inner pillar part 25 on the side of the large flange part 14 with respect to the axial direction overlaps with a tapered-roller guiding surface 30 of the large flange part 14 that is for guiding the tapered rollers 3, in a direction parallel to the tapered raceway surface 12 in the section of Fig. 1. In the section, a distance between the end face of the inner pillar part 25 on the side of the large flange part 14 and the tapered-roller guiding surface 30 in the parallel direction is set between 0.7 and 1.0 mm. An effect of suppressing seizure on the tapered-roller guiding surface 30 can be increased by such setting of the distance between the end faces of the inner pillar parts 25 on the side of the large flange part 14 and the tapered-roller guiding surface 30 in the parallel direction.

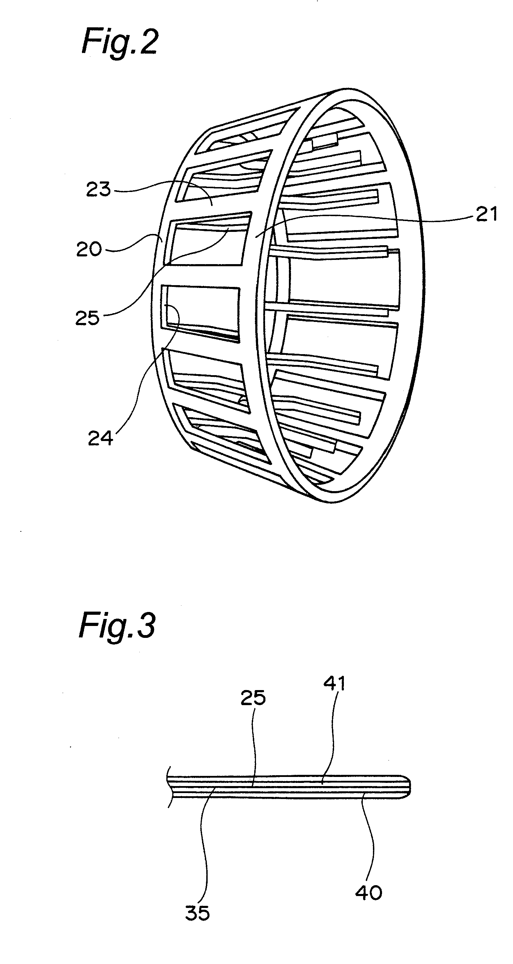

Fig. 2 is a perspective view of the cage 5.

As shown in Fig. 2, a number of the pillar parts 23 is equal to a number of the inner pillar parts 25. As shown in Fig. 2, the inner pillar parts 25 are positioned inside the pillar parts 23 with respect to the radial direction and have portions overlapping with the pillar parts 23 with respect to the radial direction in general.

With reference to Fig. 1, an inner surface 40 of the parallel portion 35 axially extends so that a distance therefrom to a center axis of the cage 5 increases with approach to the large flange part 14 in the axial direction. The inner surface 40 of the parallel portion 35 corresponds to an axially extending inner surface part.

Fig.3 is a representation of the inner surface 40 of the parallel portion 35 of the inside pillar part 25 as seen looking from radially inner side.

As shown in Fig. 3, the inner surface 40 of the inner pillar part 25 has a plurality of grooves 41. Each of grooves 41 extends in the axial direction. The plurality of grooves 41 are arranged so as to be spaced from one another in a direction of width of the inner surface 40 of the parallel portion 35. An end of each of the grooves 41 on the side of the large flange part 14 (see Fig. 1) opens in the axial direction. Virtual extension surfaces of end parts of inside surfaces of the grooves 41 on the side of the large flange part 14 overlap with the tapered-roller guiding surface 30 (see Fig. 1) of the large flange part 14 for guiding the tapered rollers 3. Thus the gear oil having been moved through the grooves 41 by centrifugal forces from the inner ring 2 and the cage 5 scatters from openings thereof toward the large flange part 14.

With reference to Fig. 1, a gap that allows the gear oil to be retained in the grooves 41 (see Fig. 3) through agency of surface tension of the gear oil when the cage 5 is stationary relative to the inner ring 2 exists between the inner surface 40 of the parallel portion 35 and the tapered raceway surface 12 of the inner ring 2. Conversely, the gear oil having a viscosity that allows the gear oil to be retained in the grooves 41 through agency of the surface tension thereof exists between the inner surface 40 of the parallel portion 35 and the tapered raceway surface 12 of the inner ring 2.

In the constitution presented above, In a state in which the pinion shaft support unit for vehicle having the conical bearing mounted therein is stopped, a vertically inside portion of an annular region between the inner ring 1 and the outer ring 2 of the conical bearing is placed in a pool of the gear oil standing on vertically inner side of the pinion shaft support unit for vehicle. Then some of the plurality of inner pillar parts 25 are placed in the pool of the gear oil. In this state, the gear oil is retained in the grooves 41 of the inner surfaces 40 of the parallel portions 35 that are not placed in the pool of the gear oil, through agency of the surface tension of the gear oil caused according to a shape and sizes of the gaps between the inner surfaces 40 of the parallel portions 35 and the tapered raceway surface 12 of the inner ring 2.

When the pinion shaft support unit for vehicle is started in this state, the gear oil having gathered in the grooves 41 of the parallel portions 35 of the inside pillar parts 25 that are not positioned in the gear oil is supplied to the side of the large flange part 14 through the openings of the grooves 41 by the centrifugal forces due to the cage 5. By about a half initial rotation of the inner ring 2, all the inner pillar parts 25 are brought into contact with the gear oil, and the gear oil is accommodated in the grooves 41 of all the inner pillar parts 25.

By a pumping effect of the centrifugal forces caused by the rotation of the inner ring 2 and the cage 5, after that, the gear oil positioned in the grooves 41 sequentially moves in the grooves 41 toward the large flange part 14, scatters from the openings of the grooves 41, and reaches the tapered-roller guiding surface 30 of the large flange part 14. By the centrifugals force due to the rotation of the inner ring 2 and the cage 5, similarly, the gear oil that has scattered radially outward from the outer circumferential surface of the inner ring 2 and that has been accommodated in the grooves 41 reaches the tapered-roller guiding surface 30 via the openings of the grooves 41.

The conical bearing of the first embodiment facilitates supply of the gear oil toward the large flange part 14 through the grooves 41 because the cage 5 has the inner surfaces 40 of the parallel portions 35 that face the tapered raceway surface 12 of the inner ring 2 at intervals and because the inner surfaces 40 of the parallel portions 35 have the grooves 41 that open at the ends thereof on the side of the large flange part 14 and that extend in the axial direction. Therefore, seizure can be suppressed on the tapered-roller guiding surface 30 of the large flange part 14 that is for guiding the tapered rollers 3.

The conical bearing of the first embodiment makes the gear oil in the grooves 41 resist flowing out of the grooves 41, even on conditions of poor lubrication due to transportation by ship for long term or the like, because the gaps that allow the gear oil to be retained in the grooves 41 through agency of the surface tension of the gear oil when the cage 5 is stationary relative to the inner ring 2 exist between the tapered raceway surface 12 of the inner ring 2 and the inner surfaces 40 of the parallel portions 35. Therefore, the gear oil in the grooves 41 can reliably be supplied onto the tapered-roller guiding surface 30 of the large flange part 14 in early phase of an operation thereof, so that seizure on the tapered-roller guiding surface 30 can be suppressed.

In the conical bearing of the first embodiment, the inner surfaces 40 of the parallel portions 35 that form the axially extending inner surface parts exist on the inner pillar parts 25 that are positioned so as to be spaced from the pillar part 23 in the radial direction, so that a weight of the cage 5 and wind resistance can be reduced in comparison with a configuration in which the axially extending inner surface parts are part of the pillar part 23. In addition, manufacturing costs therefor can be reduced.

In the conical bearing of the first embodiment, having a configuration in which the inner pillar parts 25 are connected through the bent part 24 to the radially inner end part of the first annular part 20, the bent part 24 and the inner pillar parts 25 can be formed simply by formation of an extending part that protrudes and extends from a side of the first annular part 20 opposite to the pillar parts 23 and subsequent folding of the extending part by press working. Therefore, the cage 5 having the inner pillar parts 25 can easily be formed only by adding press processes to existing techniques. That is, the conical bearing that is excellent in lubricity of the tapered-roller guiding surface 30 can be manufactured with marked ease as compared with such methods as embedding of solid lubricant in part of the outer ring.

In the conical bearing of the first embodiment, the distance between the end faces of the inner pillar parts 25 on the side of the large flange part 14 and the tapered-roller guiding surface 30 in the direction parallel to the tapered raceway surface 12 of the inner ring 2 in an axial section is between 0.7 and 1.0 mm, and thus the gear oil having scattered from the openings of the grooves 41 can efficiently be made to reach the tapered-roller guiding surface 30.

In the conical bearing of the first embodiment, the parallel portions 35 that extend in the axial direction along the tapered raceway surface 12 of the inner ring 2 from the smaller-diameter side toward the side of the large flange part 14 have the grooves 41 that open at the ends thereof on the side of the large flange part 14 and that extend in the axial direction so that the distances therefrom to the center axis increase with approach to the large flange part 14 in the axial direction, and thus the centrifugal forces in an operation are capable of causing the surrounding gear oil to be accommodated in the grooves 41 and causing the gear oil accommodated in the grooves 41 to travel in the axial direction in the grooves 41 toward the large flange part 14. In the conical bearing of the first embodiment, the virtual extension surfaces of the end parts of the inside surfaces of the grooves 41 on the side of the large flange part 14 overlap with the tapered-roller guiding surface 30 of the large flange part 14 for guiding the tapered rollers 3, and thus the gear oil having scattered from the openings of the grooves 41 on the side of the large flange part 14 efficiently reaches the tapered-roller guiding surface 30. Therefore, the gear oil can efficiently be supplied onto the tapered-roller guiding surface 30, so that the tapered-roller guiding surface 30 can be prevented from running out of the lubricant. In the embodiment, the gaps that allow the gear oil to be retained in the grooves 41 (see Fig. 3) through agency of the surface tension of the gear oil when the cage 5 is stationary relative to the inner ring 2 exist between the inner surfaces 40 of the parallel portions 35 and the tapered raceway surface 12 of the inner ring 2. In the embodiment, the gear oil having the viscosity that allows the gear oil to be retained in the grooves 41 through agency of the surface tension thereof exists between the inner surfaces 40 of the parallel portions 35 and the tapered raceway surface 12 of the inner ring 2. In the embodiment, the gear oil is retained in the grooves 41 of the inner surfaces 40 of the parallel portions 35 that are not placed in the pool of the gear oil, through agency of the surface tension of the gear oil caused according to the shape and sizes of the gaps between the inner surfaces 40 of the parallel portions 35 and the tapered raceway surface 12 of the inner ring 2. When the pinion shaft support unit for vehicle is started, in the embodiment, the gear oil having gathered in the grooves 41 of the parallel portions 35 of the inside pillar parts 25 that are not positioned in the gear oil is supplied to the side of the large flange part 14 through the openings of that grooves 41 by the centrifugal forces due to the cage 5. In the invention, however, some or all of those configurations are not necessarily required to be fulfilled, and functional effects in this paragraph can be attained even in an environment in which some or all of the configurations are not fulfilled. It is needless to say, however, that seizure on the large flange part of the inner ring can more effectively be suppressed by possession of the configurations.

The grooves 41 are formed on the inner surfaces 40 of the parallel portions 35 of the inner pillar parts 25 in the conical bearing of the first embodiment, whereas the grooves may extend from one end to the other end on the inner pillar parts in the axial direction in the invention. In short, the grooves may be formed on any part as long as the part includes the end parts on the side of the large flange part on the axially extending inner surface parts. A distance between the inner pillar parts and the inner ring raceway surface in the radial direction is preferably between 0.5 and 1.5 mm. The distance is required to be on the order of 0.5 mm at a minimum in consideration of variation in precision of components in order to prevent contact between the cage and the inner ring and is required to be not more than 1.5 mm at a maximum in order to maintain a surface film of the lubricating liquid (e.g., surface oil film, surface film of cleaning solvent or the like).

The inner ring 2 has the small flange part 13 on the smaller-diameter side of the tapered raceway surface 12 in the conical bearing of the first embodiment, whereas the inner ring of the invention may lack the small flange part on the smaller-diameter side of the tapered raceway surface.

The bent part 24 connected to the first annular part 20 is annular in the conical bearing of the first embodiment, whereas the bent part connected to the first annular part in the invention may be non-annular and may be composed of a plurality of protruding parts that protrude at circumferential intervals from the radially inner end of the first annular part.

There exist the inner pillar parts 25 as many as the pillar parts 23 in the conical bearing of the first embodiment, whereas the number of the inner pillar parts 25 may differ from that of the pillar parts 23 in the invention. Where the number of the pillar parts is 2N (N is a natural number), for instance, the number of the inner pillar parts may be N and the inner pillar parts may exist so as to radially overlap with every other pillar parts numbered in N. In short, there may exist any number of inner pillar parts as long as the number of the inner pillar parts is not greater than that of the pillar parts.

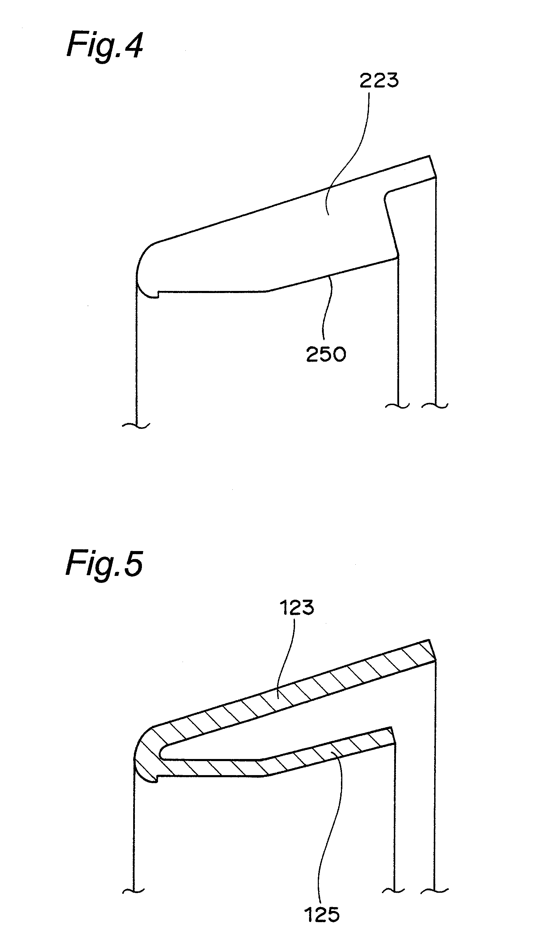

The inner surfaces 40 of the parallel portions 35 that form the axially extending inner surface parts are part of the inner pillar parts 25 that are positioned so as to be spaced from the pillar parts 23 in the radial direction in the conical bearing of the first embodiment, whereas axially extending inner surface parts 250 having grooves, as shown in Fig. 4, i.e., an axial sectional view of a cage of a conical bearing of a modification, may be part of inner surfaces of pillar parts 223 or may be the whole inner surfaces of the pillar parts in the invention.

The inner surfaces 40 of the parallel portions 35 of the inner pillar parts 25 that form the axially extending inner surface parts have the plurality of grooves 41 extending in the axial direction in the conical bearing of the first embodiment, whereas there may exist a plurality of axially extending inner surface parts and each axially extending inner surface part may have only one groove in the invention.

The cage 5 is made of metal and has at least a portion formed by press forming (the whole cage may be formed by press forming or only the portion may be formed by press forming) in the conical bearing of the first embodiment, whereas the cage may be made of resin and may be formed by injection molding or the like, for instance, in the invention.

The inner ring 2 is a turning wheel and the outer ring 1 is a fixed wheel in the conical bearing of the first embodiment, whereas the inner ring may be a fixed wheel and the outer ring may be a turning wheel in the invention. It is needless to say, however, that the inner ring is preferably a turning wheel in terms of use of centrifugal forces.

A thickness of the pillar parts 23 is generally as large as that of the inner pillar parts 25 in the axial section in the conical bearing of the first embodiment, whereas a thickness of pillar parts 123 may be larger than that of inner pillar parts 125 in an axial section, as shown in Fig. 5, i.e., an axial sectional view of a cage of a conical bearing of a modification, or conversely, a thickness of pillar parts may be smaller than that of inner pillar parts in the invention.

In the conical bearing of the first embodiment, the lubricating liquid is the gear oil is lubricated with the gear oil, whereas the lubricating liquid may be mineral oil, poly-α-olefin oil, diester oil, polyol ester oil, alkyl diphenyl ether oil, silicone oil, paraffin oil, fluorine oil or the like, for instance, in the invention. In the invention, the lubricating liquid preferably has a viscosity that allows the gear oil to be retained in the grooves on the axially extending inner surface parts through agency of the surface tension thereof on basis of the gaps between the tapered raceway surface of the inner ring and the axially extending inner surface parts when the cage is stationary relative to the inner ring. It is needless to say, however, that increase in the gaps between the tapered raceway surface of the inner ring and the axially extending inner surface parts leads to increase in minimal viscosity of the lubricating liquid that can be used.

The conical bearing of the first embodiment is provided on the pinion shaft of the pinion shaft support unit for vehicle, whereas the conical bearing of the invention may be provided on a rotation shaft in an environment in which cleaning solvent as the lubricating liquid scatters around.

The conical bearing of the first embodiment is used in an environment in which the lubricating liquid flows from the one opening to the other opening between the outer ring and the inner ring, whereas at least one of the openings between the outer ring and the inner ring may be sealed with a seal member in the conical bearing of the invention. That is because seizure on the tapered-roller guiding surface of the large flange part on the larger-diameter side of the tapered raceway surface of the inner ring can be suppressed even in such a configuration.

In the conical bearing of the first embodiment, the inner surfaces 40 of the parallel portions 35 that form the axially extending inner surface parts have the grooves 41. In the invention, however, there may exist no grooves on the axially extending inner surface parts. That is because formation of surface film of lubricating liquid (e.g., surface oil film, on condition that the lubricating liquid is lubricating oil) between the axially extending inner surface parts and the tapered raceway surface of the inner ring, delivery of the lubricating liquid onto the tapered-roller guiding surface of the large flange part of the inner ring along the axially extending inner surface parts, and improvement in lubricity of the tapered-roller guiding surface can be attained in such a configuration, by providing that the gaps between the tapered raceway surface of the inner ring and the axially extending inner surface parts are capable of retaining the lubricating liquid on the axially extending inner surface parts through agency of the surface tension of the lubricating liquid when the cage is stationary relative to the inner ring.

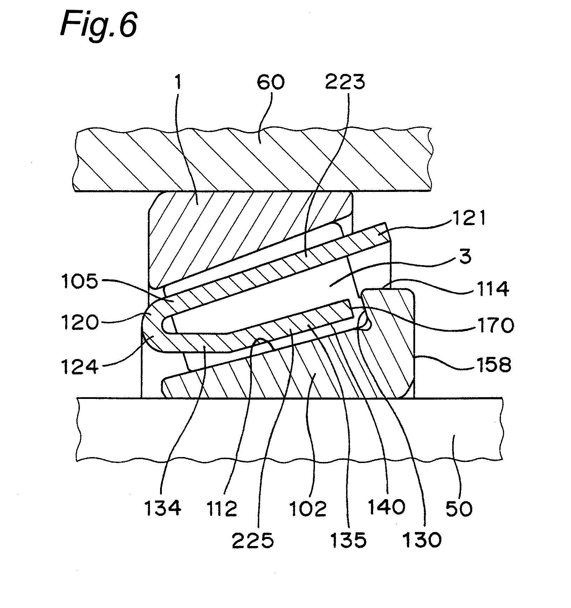

Fig. 6 is an axial sectional view of a conical bearing according to a second embodiment of the invention.

The conical bearing of the second embodiment differs from the conical bearing of the first embodiment in shape of the inner ring and shape of the cage, and other configurations thereof are the same as those of the conical bearing of the first embodiment.

For the conical bearing of the second embodiment, the same components as those of the conical bearing of the first embodiment are designated by the same reference numerals and description thereon is omitted. For the conical bearing of the second embodiment, description on functional effects and modifications common to those of the conical bearing of the first embodiment is omitted and description will be given only of configurations, functional effects, and modifications different from those of the conical bearing of the first embodiment.

A inner ring 102 of the conical bearing according to the second embodiment has a shape having a large flange part 114 on a larger-diameter side of a tapered raceway surface 112 and no flange part on a smaller-diameter side of the tapered raceway surface 112. As shown in Fig. 6, an outside diameter of an outer circumferential surface of the inner ring 102 increases generally like a linear function with approach in an axial direction from an end part thereof axially opposite to the large flange part 114 to an end part on the larger-diameter side of the tapered raceway surface 112. The inner ring 102 differs from the inner ring 2 of the conical bearing of the first embodiment only in that the inner ring 102 has no small flange part and other configurations thereof are the same as those of the inner ring 2 of the conical bearing of the first embodiment.

A cage 105 of the conical bearing according to the second embodiment has a first annular part 120, a second annular part 121, a plurality of pillar parts 223, a bent part 124, and a plurality of inner pillar parts 225.

The cage 105 differs from the cage 5 of the conical bearing of the first embodiment only in that a thickness of the inner pillar parts 225 in a circumferential direction is specified and in that grooves formed on the inner pillar parts 225 are not opened toward the side of the large flange part 114 in the axial direction and other configurations thereof are the same as those of the cage 5 of the conical bearing of the first embodiment.

More particularly, the bent part 124 is bent toward radially inner side from a radially inner end part of the first annular part 120. The inner pillar parts 225 extend in the axial direction from an end part being located opposite to the first annular part 120 in the bent part 124, opposite to the first annular part 120, toward the side of the large flange part 114 and are positioned so as to be spaced from the pillar parts 223 in a radial direction.

The inner pillar parts 225 each have a folded portion 134 and a parallel portion 135, and the folded portion 134 extends generally in a direction of an axis of the cage 105. The parallel portion 135 extends generally in parallel with and along the tapered raceway surface 112 of the inner ring 102, from an end part of the folded portion 134 on the axis side with respect to the radial direction.

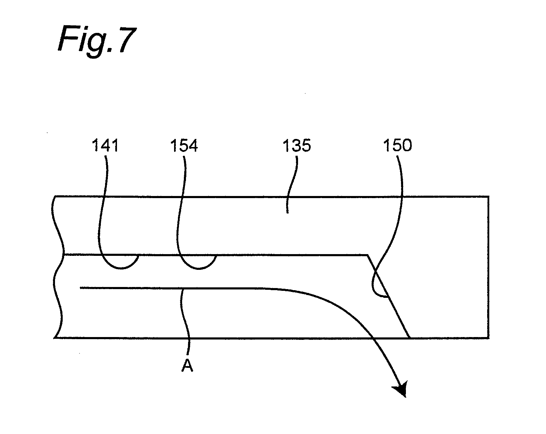

The bent part 124 has an annular structure. A size of the folded portion 134 in the circumferential direction is larger than a size of the parallel portion 135 in the circumferential direction. An inner surface 140 that is a radially inner end face of the parallel portion 135 has grooves 141 (see Fig. 7) extending generally in the axial direction.

A distance between an end face 170 of the parallel portion 135 on the side of the large flange part 114 and a tapered-roller guiding surface 130 of the large flange part 114 and a distance in the radial direction between the inner pillar part 225 and the tapered raceway surface 112 of the inner ring 102 (precisely, distance in the radial direction between the inner surface 140 of the parallel portion 135 of the inside pillar part 225 and the tapered raceway surface 112) are equal to those in the first embodiment.

Fig. 7 is an axial schematic section that passes across a bottom 154 of a groove 141 of the parallel portion 135 in the end part of the parallel portion 135 on the side of the large flange part 114.

In Fig. 7, the bottom 154 of the groove 141 of the parallel portion 135 is generally parallel to the tapered raceway surface 112 of the inner ring 102. The groove 141 of the parallel portion 135 has an end surface 150 on the side of the large flange part 114 with respect to a direction of extension thereof. In the axial section that passes across the bottom 154 of the groove 141, as shown in Fig. 7, the end surface 150 is inclined relative to a direction of a line perpendicular to the bottom 154 of the groove 141 so as to near the tapered-roller guiding surface 130 of the large flange part 114 with nearness to the axis of the inner ring 102.

The invention may have a configuration in which the tapered rollers are not in contact with the inner pillar parts, whereas the second embodiment has a configuration in which the tapered rollers 3 are stably held by the inner pillar parts 225 so that a stable tapered-roller assembly is composed only of the cage 105 and the plurality of tapered rollers 3. That is, the tapered rollers in the tapered-roller assembly can be brought into contact with the inner pillar parts 225 by being moved before the tapered-roller assembly is incorporated in the conical bearing. The tapered rollers are not capable of coming out of pockets of the cage 105 because ranges of travel of the tapered rollers are restricted by forces from the inner pillar parts 225.

In general, it is common for a conical bearing to have a flange part on a side of a smaller end face on a inner ring as in a side of a larger end face. The small flange part on the side of the smaller end face does not greatly influence performance (such as strength and life) of the bearing because a main purpose of the small flange part is to prevent tapered rollers from scattering in disassembling of the bearing, while the large flange part on the side of the larger end face serves as a thrust pad for the tapered rollers. That is, the small flange part has a defect of less effect (cost-effectiveness) for cost increase caused by machining thereof in comparison with the large flange part. Such bearings are supplied to customers while each is basically in a state in which a inner ring and a outer ring are assembled into a set.

Though it is common in a bearing having the small flange part to make an assembly from a inner ring, a cage, and a plurality of tapered rollers and to perform press fitting onto a shaft of the assembly composed of the inner ring, the cage, and the plurality of tapered rollers in assemblage of the conical bearing, forces may accidentally be exerted on the cage, the tapered rollers and/or the like in the press fitting onto the shaft of the assembly composed of the inner ring, the cage, and the plurality of tapered rollers, so that the inner ring may be damaged.

In the conical bearing of the second embodiment, the stable tapered-roller assembly can be formed only of the cage 105 and the plurality of tapered rollers 3, and thus the tapered rollers 3 are prevented from being scattered when the bearing is disassembled. Therefore, the small flange part can be omitted on the inner ring 102 as in the second embodiment, so that simplification of a structure of the inner ring 102 and reduction in cost of the bearing can be accomplished. In addition, parts (housing) corresponding to the inner ring and the outer ring can be made optional for customers and only the tapered-roller assembly without the inner ring and the outer ring can be supplied to the customers. Further, the tapered-roller assembly composed of the cage 105 and the plurality of tapered rollers 3 can be mounted on the inner ring 102 from the smaller-diameter side of the tapered raceway surface 112 of the inner ring 102 after the initial press fitting of the inner ring 102 onto the shaft, because the stable tapered-roller assembly can be formed only of the cage 105 and the plurality of tapered rollers 3 and because the inner ring 102 has no small flange part. Therefore, damages to members thereof can significantly be suppressed as compared with the mounting on the shaft of the conventional assembly composed of the inner ring, the cage, and the plurality of tapered rollers.

In the conical bearing of the second embodiment, absence of flange part on the smaller-diameter side of the tapered raceway surface 112 of the being cone 102 allows increase in radial gaps formed between the folded portions 134 of the cage 105 and the outer circumferential surface of the inner ring 102 in comparison with the configuration in which the small flange part exists on the being cone. Accordingly, more lubricating liquid can be made to flow in from between the folded portions 134 of the cage 105 and the outer circumferential surface of the inner ring 102, so that a quantity of the lubricating liquid that reaches the tapered-roller guiding surface 130 of the large flange part 114 along radially inner sides of the inner pillar parts 225 can be increased.

In the conical bearing of the second embodiment, increase in rigidity of the inner pillar parts 225 and suppression of damages to and fracture in the inner pillar parts 225 can be achieved because the size of the folded portions 134 in the circumferential direction is larger than that of the parallel portions 135 in the circumferential direction.

In the conical bearing of the second embodiment, the lubricating liquid having flowed into the conical bearing can more efficiently and smoothly be guided by the inner pillar parts 225 onto the tapered-roller guiding surface 130 because the size of the folded portions 134 in the circumferential direction is larger than that in the circumferential direction of the parallel portions 135 that are positioned on downstream side of the folded portions 134 in flow of the lubricating liquid.

In the conical bearing of the second embodiment, the lubricating liquid can be guided along the end surface 150 onto the tapered-roller guiding surface 130 as shown by an arrow A in Fig. 7 because the end surface 150 of the groove 141 on the side of the large flange part 114 with respect to the direction of extension thereof is inclined relative to the direction of the line perpendicular to the bottom 154 of the groove 141 so as to near the tapered-roller guiding surface 130 with nearness to the axis of the inner ring 102 in the axial section that passes across the bottom 154 of the groove 141.

The grooves 141 have only to extend in the axial direction as in the configuration of the first embodiment, whereas the grooves 141 may be angular grooves or may be circular grooves, and the grooves 141 may have a shape of arc, ellipse, triangle, quadrangle such as rectangle, polygon having five or more sides or the like in a section perpendicular to the direction of extension of the grooves 141.

In the conical bearing of the second embodiment, the folded portions 134 extend generally in the direction of the axis of the cage 105. In the invention, however, the folded portions may extend from an end part of the bent part in the directions such that the folded portions near the axis of the cage and, more particularly, the folded portions may extend in the directions such that the folded portions near the end face of the inner ring on the larger-diameter side of the tapered raceway surface in the axial direction (the end face of the inner ring that corresponds to an end face designated by reference numeral 158 in Fig. 6) while nearing the axis of the cage in the radial direction.

The bent part 124 is annular in the conical bearing of the second embodiment, whereas it is preferable in the invention, if the bent part is not annular, that a width of the bent part in the circumferential direction is larger than or as large as that of the folded portions, because lubricity and rigidity can thereby be increased.

### REFERENCE SIGNS LIST

1 outer ring
2, 102 inner ring
3 tapered roller
5, 105 cage
11 tapered raceway surface of outer ring
12, 112 tapered raceway surface of inner ring
14, 114 large flange part of inner ring
20, 120 first annular part
21, 121 second annular part
23, 123, 223 pillar part
24, 124 bent part
25, 125, 225 inner pillar part
20, 130 tapered-roller guiding surface of large flange part
40, 140 inner surface of parallel portion of inner pillar part
41, 141 groove

## Claims

1. A conical bearing comprising:
a outer ring having a tapered raceway surface,
a inner ring having a tapered raceway surface and a flange part placed on larger-diameter side of the tapered raceway surface,
a plurality of tapered rollers placed between the tapered raceway surface of the outer ring and the tapered raceway surface of the inner ring, and
a cage including a first annular part, a second annular part having an inside diameter larger than an inside diameter of the first annular part, a plurality of pillar parts that couple the first annular part and the second annular part to each other and that are placed so as to be spaced from one another in a circumferential direction, and pockets for housing the tapered rollers between the pillar parts neighboring in the circumferential direction, wherein
the cage comprises axially extending inner surface parts that face the tapered raceway surface of the inner ring at intervals and that extend in an axial direction from smaller-diameter side of the tapered raceway surface of the inner ring toward the flange part, between the first annular part and the second annular part with respect to the axial direction and inside the pillar parts with respect to a radial direction, wherein
gaps between the tapered raceway surface of the inner ring and the axially extending inner surface parts that allow lubricating liquid to be retained on the axially extending inner surface parts through agency of surface tension of the lubricating liquid when the cage is stationary relative to the inner ring, wherein
the cage further comprises:
a bent part that is connected to a radially inner end part of the first annular part and that is bent from the end part toward the flange part in the axial direction, and
inner pillar parts that extend in the axial direction from an end part being located opposite to the first annular part in the bent part, toward the large flange part and that are positioned so as to be spaced from the pillar parts in the radial direction, and wherein
the axially extending inner surface parts reside on the inner pillar parts.

2. The conical bearing as claimed in Claim 1, wherein
the axially extending inner surface parts comprise grooves extending in the axial direction, and wherein
the gaps allow the lubricating liquid to be retained in the grooves through agency of the surface tension of the lubricating liquid when the cage is stationary relative to the inner ring.

3. A conical bearing comprising:
a outer ring having a tapered raceway surface,
a inner ring having a tapered raceway surface and a flange part placed on larger-diameter side of the tapered raceway surface,
a plurality of tapered rollers placed between the tapered raceway surface of the outer ring and the tapered raceway surface of the inner ring, and
a cage that includes a first annular part, a second annular part having an inside diameter larger than an inside diameter of the first annular part, and a plurality of pillar parts which couple the first annular part and the second annular part to each other and which are placed so as to be spaced from one another in a circumferential direction and that houses the tapered rollers in pockets formed between the pillar parts neighboring in the circumferential direction, wherein
the cage further comprises:
axially extending inner surface parts that face the tapered raceway surface of the inner ring at intervals and that extend in an axial direction from smaller-diameter side of the tapered raceway surface of the inner ring toward the flange part, between the first annular part and the second annular part with respect to the axial direction and inside the pillar parts with respect to a radial direction, wherein
the axially extending inner surface parts each comprise grooves that open at ends thereof on a side of the flange part and that extend in the axial direction, wherein
a distance between the grooves and a center axis of the cage increases with approach to the flange part in the axial direction in end parts of the grooves on the side of the flange part, and wherein
virtual extension surfaces of end parts of inside surfaces of the grooves on the side of the flange part overlap with a tapered-roller guiding surface of the flange part for guiding the tapered rollers.

4. The conical bearing as claimed in Claim 3, wherein
the cage further comprises:
a bent part that is connected to a radially inner end part of the first annular part and that is bent from the end part toward the flange part in the axial direction, and
inner pillar parts that extend in the axial direction from an end part of the bent part, opposite to the first annular part, toward the large flange part and that are positioned so as to be spaced from the pillar parts in the radial direction, and wherein
the axially extending inner surface parts reside on the inner pillar parts.
